# EUROPÄISCHE PATENTSCHRIFT

(11) **EP 1 412 120 B1**
(45) Veröffentlichungstag und Bekanntmachung des Hinweises auf die Patenterteilung: **06.07.2005**
(21) Anmeldenummer: 01988085.5
(22) Anmeldetag: 28.12.2001
(51) Int. Cl.: B23D 45/20, B23D 45/10, B23D 47/02, B23D 47/08, B27B 5/04, B27D 5/00

(54) **KAPPAGGREGAT**
CUTTING SYSTEM
SYSTEME DE COUPE

(30) Priorität: 09.01.2001 DE 10101673
(43) Veröffentlichungstag der Anmeldung: 28.04.2004
(73) Patentinhaber: REICH SPEZIALMASCHINEN GmbH, 72622 Nürtingen (DE)
(72) Erfinder: HEIDE, Martin, 72658 Bempflingen (DE); HENZLER, Roland, 72622 Raidwangen (DE)
(74) Vertreter: HOEGER, STELLRECHT & PARTNER Patentanwälte
(86) Internationale Anmeldenummer: PCT/EP2001/015364
(87) Internationale Veröffentlichungsnummer: WO 2002/055247

(56) Entgegenhaltungen:
- EP-A- 0 538 513
- CH-A- 528 342
- DE-U- 7 115 330
- FR-A- 2 084 411

## Beschreibung

Die Erfindung betrifft ein Kappaggregat für Maschinen zur Bearbeitung von geradlinig und fortlaufend in einer Werkstückdurchlaufebene bewegten plattenförmigen Werkstücken zum Abtrennen von über die vorderen und hinteren, im wesentlichen quer zur Bewegungsrichtung der Werkstücke ausgerichteten Querseiten der Werkstücke hinausragenden Überständen von Kantenmaterial, welches an parallel zur Bewegungsrichtung verlaufenden Längsseiten der Werkstücke angebracht ist, mit mindestens einer ein motorisch angetriebenes Sägeblatt umfassenden Sägeeinheit, die zwischen einer Stellung oberhalb der Werkstücke und einer Stellung unterhalb der Werkstücke schräg zur Bewegungsrichtung der Werkstücke verfahrbar gehalten ist, und mit einem dem Sägeblatt zugeordneten, eine Tastfläche aufweisenden Tastorgan, wobei die Tastfläche mit der Schnittebene des Sägeblatts fluchtet und an die vordere oder hintere Querseite der Werkstücke anlegbar ist.

Derartige Kappaggregate sind aus der EP 0 538 513 B1 bekannt. Sie kommen insbesondere bei Kantenanleimmaschinen zum Einsatz, mit deren Hilfe Kantenmaterial in Form einer Anleimkante an eine Längsseite des Werkstücks angeleimt werden kann. Die Anleimkante weist nach dem Verleimen einen Kantenüberstand auf, der mittels des Kappaggregates abgetrennt werden kann.

Zum Abtrennen kommt eine Sägeeinheit mit einem üblicherweise mittels eines Elektromotors angetriebenen Sägeblatt zum Einsatz. Die Sägeeinheit ist hierbei schräg zur Bewegungsrichtung des Werkstücks verfahrbar gehalten und kann aus einer Stellung oberhalb oder unterhalb des Werkstückes in eine Stellung unterhalb bzw. oberhalb des Werkstückes und anschließend zurück verfahren werden, wobei während der Bewegung mittels des Sägeblattes ein Kantenüberstand abgetrennt wird.

Zur Ausrichtung des Sägeblattes in Höhe der vorderen oder hinteren Querseite des Werkstückes umfaßt das Kappaggregat ein Tastorgan, dessen Tastfläche mit der Schnittebene des Sägeblattes fluchtet. Das Tastorgan ist an die vordere oder hintere Querseite des Werkstückes anlegbar, so daß das Sägeblatt in Höhe der vorderen oder hinteren Querseite des Werkstückes positionierbar ist. Dies ermöglicht es, den Kantenüberstand abzutrennen, während die Sägeeinheit schräg zur Bewegungsrichtung des Werkstückes aus einer Stellung oberhalb oder unterhalb des Werkstückes in eine Stellung unterhalb bzw. oberhalb des Werkstückes verfahren wird.

Während der Bewegung der Sägeeinheit gleitet die Tastfläche des Tastorganes entlang der Querseite des Werkstückes. In vielen Fällen ist an diese Querseite bereits in einem vorhergehenden Arbeitsgang eine Anleimkante angebracht worden, die in der Regel eine empfindliche Oberfläche aufweist. Das Entlanggleiten des Tastorganes kann hierbei zu einer Beschädigung der Oberfläche der an die Querseite des Werkstückes angebrachten Anleimkante zur Folge haben in Form von für den Benutzer erkennbaren Taststreifen. Dadurch wird die Qualität des fertigen Werkstückes herabgesetzt.

Aufgabe der vorliegenden Erfindung ist es, ein Kappaggregat der eingangs genannten Art derart weiterzubilden, daß die Gefahr einer Beschädigung der Oberfläche der Querseite des Werkstückes vermieden wird.

Diese Aufgabe wird bei einem gattungsgemäßen Kappaggregat erfindungsgemäß dadurch gelöst, daß das Tastorgan ein zusammen mit der Sägeeinheit verfahrbares Ausricht-element sowie ein relativ zum Ausrichtelement bewegbares, die Tastfläche aufweisendes Tastelement umfaßt.

Das Ausrichtelement kann während der Bewegung der Sägeeinheit starr mit der Sägeeinheit verbunden sein und während des Abtrennvorganges die Ausrichtung des Sägeblatts bezogen auf die Querseite des Werkstückes sicherstellen. Das bezogen auf das Ausrichtelement bewegliche Tastelement kann demgegenüber ortsfest an die Querseite des Werkstückes angelegt werden, so daß eine Relativbewegung zwischen dem Tastelement und der Querseite des Werkstückes entfällt. Eine Beschädigung der Werkstückquerseite beim Abtrennen von Kantenüberständen wird dadurch zuverlässig verhindert.

Das Tastelement ist bevorzugt senkrecht zur Werkstückdurchlaufebene verschiebbar am Ausrichtelement gehalten. Hierzu können ineinander eingreifende Führungsmittel am Tastelement und am Ausrichtelement angeordnet sein.

Bei einer besonders bevorzugten Ausführungsform der Erfindung ist vorgesehen, daß das Tastelement mittels einer Führungsschiene und eines entlang der Führungsschiene verfahrbaren Führungsschlittens am Ausrichtelement gehalten ist. Günstig ist es, wenn Führungsschlitten und Führungsschiene einander hintergreifende Abschnitte aufweisen, denn dadurch kann auf konstruktiv einfache Weise sichergestellt werden, daß das Tastelement seine Ausrichtung relativ zum Werkstück beibehält, während das Ausrichtelement zusammen mit der Sägeeinheit relativ zum Werkstück verfahren wird.

Vorzugsweise ist die Führungsschiene am Ausrichtelement und der Führungsschlitten am Tastelement gehalten. Hierbei ist es von besonderem Vorteil, wenn das Tastelement mit dem Führungsschlitten lösbar verbindbar ist, da dadurch die Ausrichtung des Tastelementes justiert werden kann.

Bei einer kostengünstig herstellbaren Ausführungsform ist vorgesehen, daß die Führungsschiene einstückig mit dem Ausrichtelement verbunden ist.

Bei einer besonders bevorzugten Ausführungsform ist das Tastelement mittels einer Linearführung, beispielsweise einer Schwalbenschwanzführung, am Ausrichtelement gehalten. Eine Unearführung - vorzugsweise eine Profilschienenführung unter Einsatz umlaufender Kugeln - ermöglicht eine praktisch spielfreie und reibungsarme Relativbewegung zwischen Tast- und Ausrichtelement. Mittels einer Schwalbenschwanzführung kann auf konstruktiv einfache Weise verhindert werden, daß sich das Tastelement während der Bewegung des Ausrichtelementes von diesem abhebt.

Das Tastelement kann beispielsweise als Tastleiste ausgebildet sein, wobei bevorzugt mittels der Tastleiste eine dem Werkstück zugewandte Stirnseite des Ausrichtelementes überdeckt werden kann.

Bei einer besonders störungsunempfindlichen Ausführungsform ist vorgesehen, daß das Tastorgan mindestens einen Anschlag umfaßt zur Begrenzung der Bewegung des Tastelementes relativ zum Ausrichtelement. So können beispielsweise ein oberer und ein unterer Anschlag vorgesehen sein, mit deren Hilfe die Bewegung des Tastelementes senkrecht zur Werkstückdurchlaufebene begrenzt werden kann. Ein irrtümliches Ablösen des Tastelementes vom Ausrichtelement wird dadurch verhindert.

Von Vorteil ist es, wenn dem Anschlag ein elastisches Pufferelement zugeordnet ist, so daß am Ende der Bewegung des Tastelementes relativ zum Ausrichtelement ein metallisch harter Stoß vermieden wird.

Soll mittels der Sägeeinheit der über die hintere Querseite des Werkstückes hinausragende Kantenüberstand abgetrennt werden, so ist es günstig, wenn das Tastorgan eine an die Oberseite des Werkstückes anlegbare und über die hintere Querseite des Werkstückes abrollbare Tastrolle umfaßt, wobei der an die hintere Querseite des Werkstückes anlegbare Anlagebereich der Tastrolle in Bewegungsrichtung über die Tastfläche übersteht. Die vorzugsweise aus einem gummielastischen Material gefertigte oder einen gummielastischen Überzug aufweisende Tastrolle rollt bei der Positionierung der der hinteren Querseite des Werkstückes zugeordneten Sägeeinheit über die hintere Querseite, um dann eine Position unterhalb des Werkstückes einzunehmen. Da der Anlagebereich der Tastrolle über die Tastfläche in Bewegungsrichtung übersteht, nimmt während der Überrollbewegung der Tastrolle die Tastfläche eine Stellung im Abstand zur hinteren Querseite des Werkstückes ein. Erreicht die Tastrolle die Unterseite des Werkstückes, so kann das Tastelement bei der weiteren Bewegung der zugeordneten Sägeeinheit an die hintere Querseite des Werkstückes angelegt werden und in dieser Relativstellung zum Werkstück verbleiben, so daß während der Überrollbewegung der Tastrolle eine Beschädigung der hinteren Querseite des Werkstückes durch das Tastelement zuverlässig verhindert wird.

Die nachfolgende Beschreibung einer bevorzugten Ausführungsform der Erfindung dient im Zusammenhang mit der Zeichnung der näheren Erläuterung. Es zeigen:
- Figur 1:: eine vereinfachte schaubildliche Darstellung eines Kappaggregates zum Abtrennen von über eine vordere und eine hintere Querseite eines Werkstückes hinausragenden Kantenüberständen;
- Figur 2:: eine Seitenansicht eines Tastorganes des Kappaggregates beim Anlegen an eine vordere Querseite des Werkstückes;
- Figur 3:: eine Seitenansicht entsprechend Figur 2 beim Abtrennen des vorderen Kantenüberstandes;
- Figur 4:: eine Seitenansicht entsprechend Figur 2 nach erfolgtem Abtrennen des vorderen Kantenüberstandes;
- Figur 5:: eine Seitenansicht entsprechend Figur 2 beim Positionieren eines Tastorganes an die hintere Querseite des Werkstückes;
- Figur 6:: eine Seitenansicht entsprechend Figur 2 beim Abtrennen des hinteren Kantenüberstandes und
- Figur 7:: eine Seitenansicht entsprechend Figur 2 nach erfolgtem Abtrennen des hinteren Kantenüberstandes.

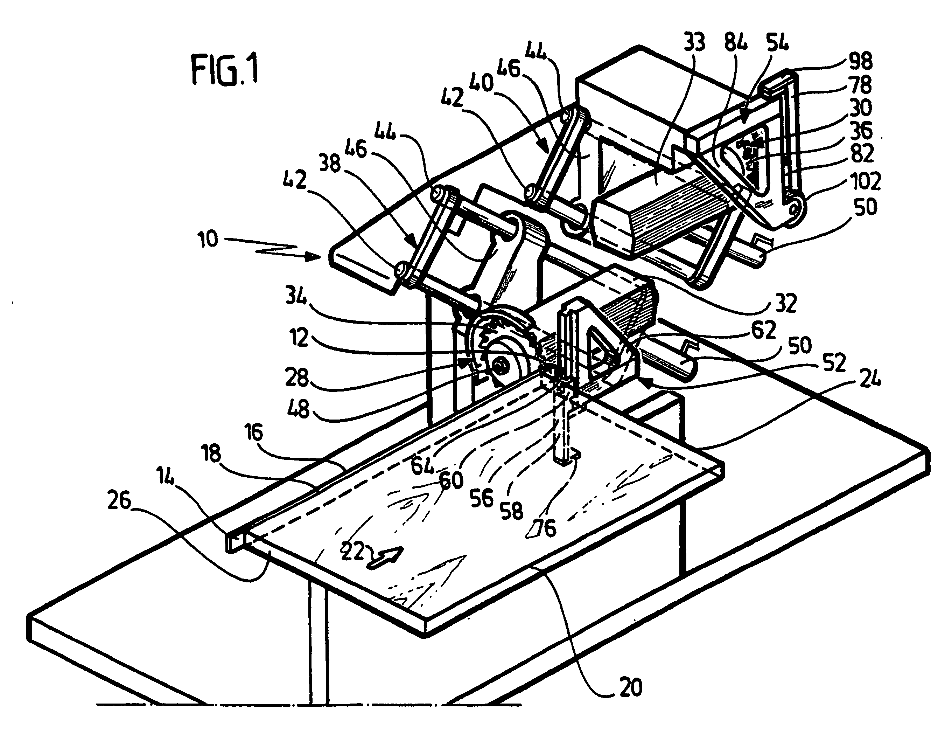

In Figur 1 ist in schematischer Darstellung ein insgesamt mit dem Bezugszeichen 10 belegtes Kappaggregat dargestellt zum Abtrennen von Kantenüberständen 12 bzw. 14 einer Anleimkante 16, die an eine Längsseite 18 eines Werkstückes 20 angeleimt wurde. Das Kappaggregat 10 bildet hierbei eine von mehreren Stationen einer Maschine zur Bearbeitung von geradlinig und fortlaufend in einer Werkstückdurchlaufebene bewegten plattenförmigen Werkstücken. Hierbei wird in einer dem Kappaggregat 10 vorgelagerten Anleimstation die Anleimkante 16 an die Längsseite 18 des Werkstückes 20 angeleimt. Die Anleimkante 16 steht in Bewegungsrichtung 22 des Werkstückes 20 nach vorne über die vordere Querseite 24 und nach hinten über die hintere Querseite 26 des Werkstückes 20 hinaus und bildet in diesen Bereichen die Kantenüberstände 12 bzw. 14.

Zur Abtrennung des vorderen Kantenüberstandes 12 umfaßt das Kappaggregat 10 eine vordere Sägeeinheit 28, und zum Abtrennen des hinteren Kantenüberstandes 14 weist das Kappaggregat 10 eine hintere Sägeeinheit 30 auf. Die beiden Sägeeinheiten 28 und 30 umfassen jeweils einen Elektromotor 32, 33 mit dessen Hilfe ein vorderes Sägeblatt 34 bzw. ein hinteres Sägeblatt 36 angetrieben werden können, zum Abtrennen der jeweiligen Kantenüberstände.

Die Sägeeinheiten 28 und 30 sind im dargestellten Ausführungsbeispiel jeweils an einer schräg zur Bewegungsrichtung 22 des Werkstückes 20 ausgerichteten Säulenführung 38 bzw. 40 gehalten und können zwischen einer Stellung oberhalb des Werkstückes 20 und einer Stellung unterhalb des Werkstückes 20 verfahren werden. Alternativ könnten statt Säulenführungen auch Linearführungen, bevorzugt mit Kugelumlaufeinheiten, zum Einsatz kommen. Die Säulenführungen 38 und 40 umfassen jeweils zwei parallel zueinander, schräg zur Bewegungsrichtung 22 des Werkstückes 20 ausgerichtete Säulen 42, 44, an denen ein Wagen 46 verschiebbar gehalten ist, der den Elektromotor 32 bzw. 33 und das drehfest an dessen Antriebswelle 48 gehaltene Sägeblatt 34 bzw. 36 trägt. Zum Antrieb der Wagen 46 umfassen die Sägeeinheiten 28 und 30 beim vorliegenden Ausführungsbeispiel jeweils einen hydraulisch oder pneumatisch betätigbaren Arbeitszylinder 50, der mit einer in der Zeichnung nicht dargestellten, an sich bekannten Kolbenstange zusammenwirkt, an deren freiem Ende einer der Wagen 46 gehalten ist. Durch Druckbeaufschlagung der Arbeitszylinder 50 können somit die Sägeeinheiten 28 und 30 entlang der Säulenführungen 38 bzw. 40 verfahren werden. Alternativ könnte der Antrieb der Wagen 46 auch mittels gesteuerter, insbesondere CNC-gesteuerter Motoren (Linearmotoren) erfolgen.

Die vordere Sägeeinheit 28 umfaßt ein vorderes Tastorgan 52, mit dessen Hilfe sichergestellt werden kann, daß das vordere Sägeblatt 34 während des Abtrennens des vorderen Kantenüberstandes 12 mit der vorderen Querseite 24 des Werkstückes 20 fluchtet. Ein hinteres Tastorgan 54 ist für die hintere Sägeeinheit 30 vorgesehen, mit dessen Hilfe sichergestellt werden kann, daß das hintere Sägeblatt 36 beim Abtrennen des hinteren Kantenüberstandes 14 mit der hinteren Querseite 26 des Werkstückes 20 fluchtet.

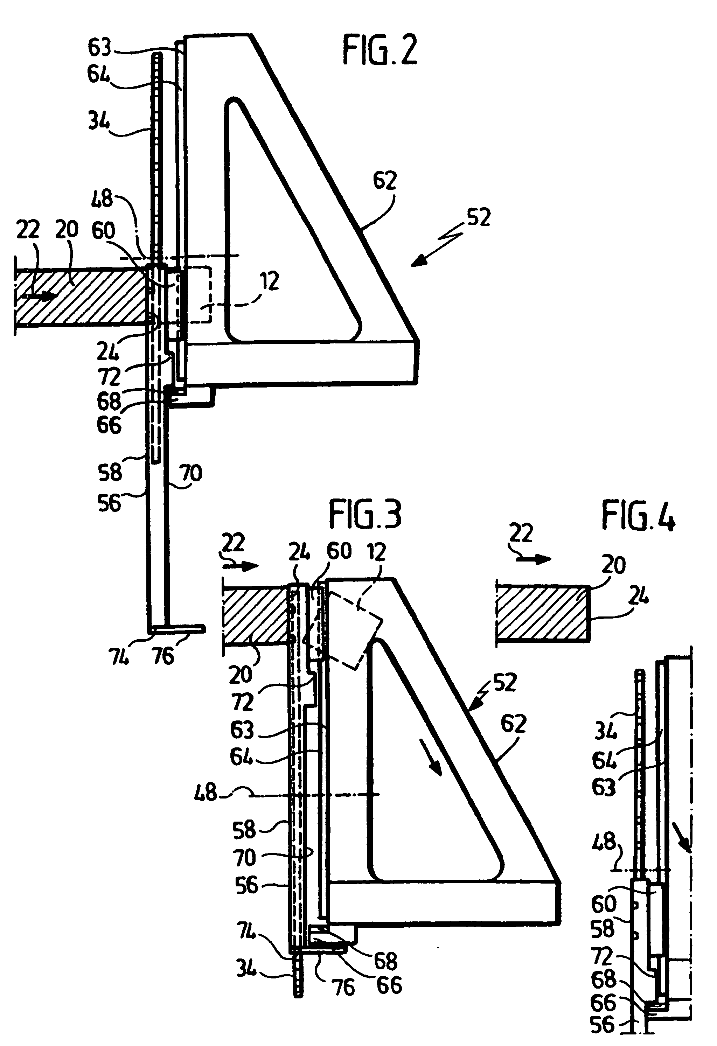

Wie insbesondere aus den Figuren 2, 3 und 4 deutlich wird, weist das vordere Tastorgan 52 ein an die vordere Querseite 24 anlegbares Tastelement auf in Form einer vorderen Tastleiste 56, die dem Werkstück 20 zugewandt eine vordere Tastfläche 58 ausbildet und mit einem vorderen Führungsschlitten 60 verschraubt ist. Das vordere Tastorgan 52 umfaßt außerdem ein Ausrichtelement in Form eines vorderen Haltebügels 62, der über eine in der Zeichnung nicht dargestellte Halterung - vorzugsweise zu Justierungszwecken einstellbar verschiebbar - mit dem Elektromotor 32 der vorderen Sägeeinheit 28 verbunden ist und auf seiner dem Werkstück 20 zugewandten Stirnseite 63 eine Führungsschiene 64 trägt, entlang derer der vordere Führungsschlitten 60 verschiebbar gehalten ist. Der Führungsschlitten 60 und die Führungsschiene 64 bilden hierbei eine Linearführung aus, im dargestellten Ausführungsbeispiel eine Schwalbenschwanzführung, mittels derer die vordere Tastleiste 56 und der vordere Haltebügel 62 senkrecht zur Werkstückdurchlaufebene relativ zueinander verschiebbar gehalten sind.

Unterhalb der Führungsschiene 64 ist am vorderen Haltebügel 62 ein hakenförmiger Vorsprung 66 angeordnet, der auf seiner der Führungsschiene 64 zugewandten Oberseite einen Gummipuffer 68 trägt. Diesem ist auf der der vorderen Tastfläche 58 abgewandten Rückseite 70 der vorderen Tastleiste 56 ein unterhalb des Führungsschlittens 60 angeordneter, einstückig mit der Tastleiste 56 verbundener erster Anschlag 72 zugeordnet, der auf den Gummipuffer 68 aufsetzbar ist. In vertikalem Abstand zum ersten Anschlag 72 trägt die vordere Tastleiste 56 auf ihrer dem Vorsprung 66 abgewandten Unterseite 74 einen zweiten Anschlag 76, der an die dem Gummipuffer 68 abgewandte Unterseite des Vorsprunges 66 anlegbar ist. Mittels der Anschläge 72 und 76 wird die Bewegung der vorderen Tastleiste 56 relativ zum vorderen Haltebügel 62 senkrecht zur Werkstückdurchlaufebene begrenzt.

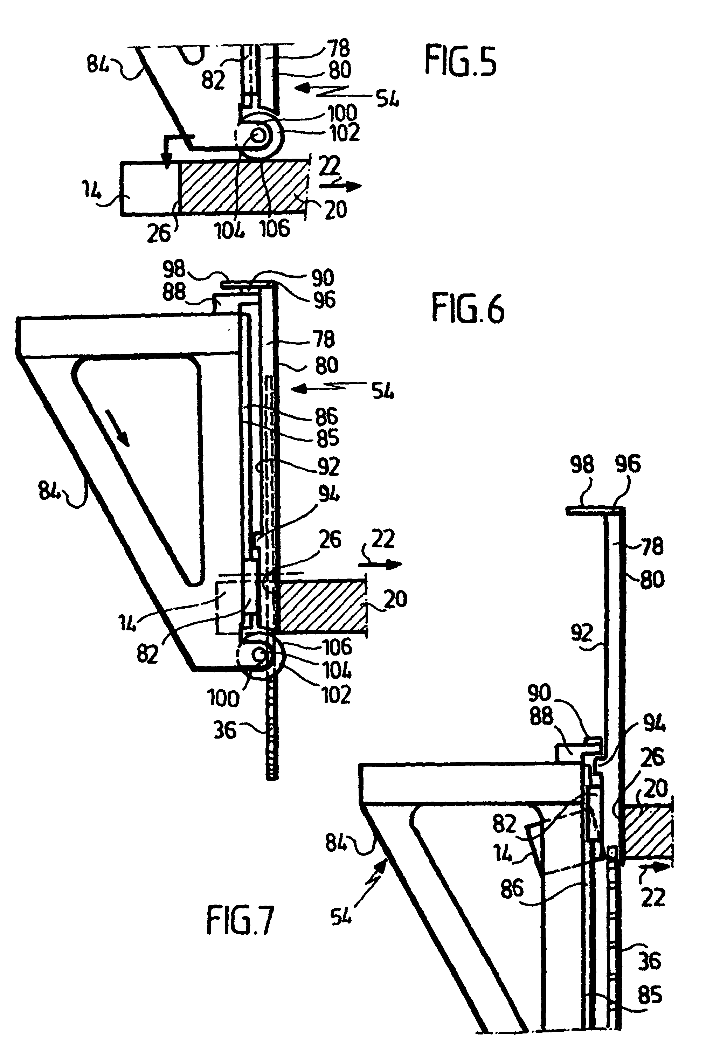

Das hintere Tastorgan 54 ist im wesentlichen entsprechend dem vorderen Tastorgan 52 ausgestattet. Wie insbesondere aus den Figuren 5, 6 und 7 deutlich wird, umfaßt das hintere Tastorgan 54 eine hintere Tastleiste 78, die der hinteren Querseite 26 des Werkstückes 20 zugewandt eine hintere Tastfläche 80 ausbildet und mit einem hinteren Führungsschlitten 82 verschraubt ist. Das hintere Tastorgan 54 umfaßt außerdem ein Ausricht-element in Form eines hinteren Haltebügels 84, der auf seiner dem Werkstück 20 zugewandten Stirnseite 85 eine einstückig mit dem Haltebügel 84 verbundene Führungsschiene 86 trägt, an der der hintere Führungsschlitten 82 senkrecht zur Werkstückdurchlaufebene verschiebbar gehalten ist, wobei die Führungsschiene 86 und der Führungsschlitten 82 eine in der Zeichnung nicht dargestellte Linearführung in Form einer an sich bekannten Schwalbenschwanzführung ausbilden.

Oberhalb der Führungsschiene 86 trägt der hintere Haltebügel 84 einen hakenartigen Vorsprung 88, auf dessen Oberseite ein Gummipuffer 90 angeordnet ist.

Die hintere Tastleiste 78 bildet auf ihrer der hinteren Tastfläche 80 abgewandten Rückseite 92 einen oberhalb des hinteren Führungsschlittens 82 angeordneten ersten Anschlag 94 aus, der von unten an den Vorsprung 88 des hinteren Haltebügels 84 anlegbar ist. Auf ihrer Oberseite 96 trägt die hintere Tastleiste 78 einen zweiten Anschlag 98, der von oben auf den Gummipuffer 90 aufsetzbar ist. Mittels der Anschläge 94 und 98 wird die Bewegung der hinteren Tastleiste 78 relativ zum hinteren Haltebügel 84 senkrecht zur Werkstückdurchlaufebene begrenzt.

Der hintere Haltebügel 84 trägt unterhalb der Führungsschiene 86 eine in Richtung der hinteren Querseite 26 hervorspringende Lagergabel 100, an der eine gummierte Tastrolle 102 um eine senkrecht zur Bewegungsrichtung 22 des Werkstückes 20 und senkrecht zur Längsrichtung der Führungsschiene 86 ausgerichtete Drehachse 104 frei drehbar gelagert ist. Die Tastrolle 102 ist bezogen auf die hintere Tastleiste 78 derart angeordnet, daß ihr an die hintere Querseite 26 des Werkstückes 20 anlegbarer Anlagebereich 106 in Bewegungsrichtung 22 des Werkstückes 20 über die hintere Tastfläche 80 übersteht.

Das Werkstück 20 wird während seiner Bearbeitung fortlaufend in Bewegungsrichtung 22 bewegt. Hierzu kommen an sich bekannte und deshalb in der Zeichnung nicht dargestellte Transportmittel zum Einsatz, beispielsweise Förderbänder oder Förderketten. Zum Abtrennen des vorderen Kantenüberstandes 12 wird die vordere Sägeeinheit 28 mittels des zugeordneten Arbeitszylinders 50 in eine derartige Position verfahren, daß die vordere Querseite 24 auf die vordere Tastfläche 58 der vorderen Tastleiste 56 auftrifft. Letztere nimmt hierbei ihre in Figur 2 dargestellte abgesenkte Stellung ein, bei der der erste Anschlag 72 auf dem Gummipuffer 68 des Vorsprunges 66 aufsitzt. Beim Auftreffen der vorderen Querseite 24 auf die vordere Tastfläche 58 ist das vordere Sägeblatt 34 vom Elektromotor 32 angetrieben und der Arbeitszylinder 50 hält die vordere Tastleiste 56 in Anlage an der vorderen Querseite 24. Die Bewegung der vorderen Sägeeinheit 28 entlang der Säulenführung 38 wird hierbei jedoch nicht behindert, so daß das fortlaufend bewegte Werkstück 20 die vordere Sägeeinheit 28 aus der in Figur 2 dargestellten Position nach unten in die in Figur 3 dargestellte Position verschiebt, wobei der vordere Kantenüberstand 12 abgetrennt wird. Während der Bewegung der vorderen Sägeeinheit 28 führt der mit dem Elektromotor 32 verbundene vordere Haltebügel 62 eine Relativbewegung zum Werkstück 20 aus während die vordere Tastleiste 56 relativ zum Werkstück 20 unverschieblich gehalten ist, so daß sich eine Relativbewegung zwischen dem vorderen Haltebügel 62 und der vorderen Tastleiste 56 einstellt. Hat der vordere Haltebügel 62 beim Verfahren der vorderen Sägeeinheit 28 eine derartige Position eingenommen, daß der Vorsprung 66 am zweiten Anschlag 76 der vorderen Tastleiste 56 anschlägt, so wird mittels Druckbeaufschlagung des zugeordneten Arbeitszylinders 50 die vordere Sägeeinheit 28 nach unten beschleunigt, so daß sich die vordere Tastleiste 56 von der vorderen Querseite 24 abhebt und sich selbsttätig aufgrund der Schwerkraft soweit entlang der vorderen Führungsschiene 64 nach unten verschiebt, bis der erste Anschlag 72 auf den Gummipuffer 68 auftrifft, wie dies in Figur 4 dargestellt ist. Die vordere Sägeeinheit 28 nimmt nunmehr eine Position unterhalb des Werkstückes 20 ein, so daß das Werkstück 20 während der weiteren Bearbeitung über die vordere Sägeeinheit 28 entlang bewegt werden kann.

Im Verlaufe der weiteren Bewegung des Werkstückes 20 wird die hintere Sägeeinheit 30 mittels Druckbeaufschlagung des zugeordneten Arbeitszylinders 50 in eine derartige Position oberhalb des Werkstückes 20 verfahren, daß die Tastrolle 102 auf der Oberseite des Werkstückes 20 zur Anlage gelangt. Die hintere Sägeeinheit 30 bleibt in dieser in Figur 5 dargestellten Stellung, bis die Tastrolle 102 die hintere Querseite 26 des Werkstückes 20 erreicht und entlang dieser nach unten abrollt. Da der Anlagebereich 106 der Tastrolle 102 über die hintere Tastfläche 80 in Bewegungsrichtung 22 vorsteht, kann die hintere Tastleiste 78, ohne die hintere Querseite 26 zu berühren, zusammen mit dem hinteren Haltebügel 84 soweit nach unten abgesenkt werden, bis die Tastrolle 102 unter das Werkstück 20 abtaucht. Die hintere Tastleiste 78 wird dann mittels des Arbeitszylinders 50 an die hintere Querseite 26 angelegt und verbleibt in dieser Position, während der hintere Haltebügel 84 mit der hinteren Sägeeinheit 30 entlang der Säulenführung 40 nach unten verfahren wird. Somit stellt sich zwischen der hinteren Tastleiste 78 und dem hinteren Haltebügel 84 eine Relativbewegung ein, während die hintere Tastfläche 80 ortsfest an der hinteren Querseite 26 des Werkstückes 20 gehalten ist. Während die hintere Sägeeinheit 30 verfahren wird, ist gleichzeitig das hintere Sägeblatt 36 vom Elektromotor 33 angetrieben, so daß der hintere Kantenüberstand 14 abgetrennt wird. Erreicht die hintere Sägeeinheit 30 eine derartige Position, daß der Vorsprung 88 am ersten Anschlag 94 der hinteren Tastleiste 78 anschlägt, so wird die Absenkbewegung der hinteren Sägeeinheit 30 abgebremst, so daß das fortlaufend bewegte Werkstück 20 sich von der hinteren Tastleiste 78 abhebt und sich diese selbsttätig aufgrund der Schwerkraft soweit entlang der hinteren Führungsschiene 86 nach unten verschiebt, bis der zweite Anschlag 98 auf den Gummipuffer 90 auftrifft.

Nachdem beide Kantenüberstände 12 und 14 abgetrennt wurden, werden die beiden Sägeeinheiten 28 und 30 wieder in ihre Ausgangsstellung oberhalb der Werkstückdurchlaufebene verfahren, so daß anschließend ein neuer Arbeitsgang durchgeführt werden kann.

## Patentansprüche

1. Kappaggregat für Maschinen zur Bearbeitung von geradlinig und fortlaufend in einer Werkstückdurchlaufebene bewegten plattenförmigen Werkstücken zum Abtrennen von über die vorderen und hinteren, im wesentlichen quer zur Bewegungsrichtung der Werkstücke ausgerichteten Querseiten der Werkstücke hinausragenden Überständen von Kantenmaterial, welches an parallel zur Bewegungsrichtung verlaufenden Längsseiten der Werkstücke angebracht ist, mit mindestens einer ein motorisch angetriebenes Sägeblatt umfassenden Sägeeinheit, die zwischen einer Stellung oberhalb der Werkstücke und einer Stellung unterhalb der Werkstücke schräg zur Bewegungsrichtung der Werkstücke verfahrbar gehalten ist, und mit einem dem Sägeblatt zugeordneten, eine Tastfläche aufweisenden Tastorgan, wobei die Tastfläche mit der Schnittebene des Sägeblatts fluchtet und an die vordere oder hintere Querseite der Werkstücke anlegbar ist, **dadurch gekennzeichnet, daß** das Tastorgan (52, 54) ein zusammen mit der Sägeeinheit (28, 30) verfahrbares Ausrichtelement (62, 84) sowie ein relativ zum Ausrichtelement (62, 84) bewegbares, die Tastfläche (58, 80) aufweisendes Tastelement (56, 78) umfaßt.

2. Kappaggregat nach Anspruch 1, **dadurch gekennzeichnet, daß** das Tastelement (56, 78) senkrecht zur Werkstückdurchlaufebene verschiebbar am Ausrichtelement (62, 84) gehalten ist.

3. Kappaggregat nach Anspruch 1 oder 2, **dadurch gekennzeichnet, daß** das Tastelement (56, 78) mittels einer Führungsschiene (64, 86) und eines entlang der Führungsschiene (64, 86) verfahrbaren Führungsschlittens (60, 82) am Ausrichtelement (62, 84) gehalten ist.

4. Kappaggregat nach Anspruch 3, **dadurch gekennzeichnet, daß** die Führungsschiene (64, 86) am Ausricht-element (62, 84) und der Führungschlitten (60, 82) am Tastelement (56, 78) gehalten ist.

5. Kappaggregat nach Anspruch 4, **dadurch gekennzeichnet, daß** das Tastelement (56, 78) mit dem Führungsschlitten (60, 82) lösbar verbindbar ist.

6. Kappaggregat nach Anspruch 4 oder 5, **dadurch gekennzeichnet, daß** die Führungsschiene (64, 86) einstückig mit dem Ausrichtelement (62, 84) verbunden ist.

7. Kappaggregat nach einem der voranstehenden Ansprüche, **dadurch gekennzeichnet, daß** das Tastelement (56, 78) mittels einer Linearführung am Ausrichtelement (62, 84) gehalten ist.

8. Kappaggregat nach einem der voranstehenden Ansprüche, **dadurch gekennzeichnet, daß** das Tastelement als Tastleiste (56, 78) ausgebildet ist.

9. Kappaggregat nach einem der voranstehenden Ansprüche, **dadurch gekennzeichnet, daß** das Tastorgan (52, 54) mindestens einen Anschlag (72, 76, 94, 98) umfaßt zur Begrenzung der Bewegung des Tastelementes (56, 78) relativ zum Ausrichtelement (62, 84).

10. Kappaggregat nach Anspruch 9, **dadurch gekennzeichnet, daß** zumindest einem Anschlag (72, 98) ein elastisches Pufferelement (68, 90) zugeordnet ist.

11. Kappaggregat nach einem der voranstehenden Ansprüche, **dadurch gekennzeichnet, daß** das Tastorgan (52, 54) eine an die Oberseite des Werkstückes (20) anlegbare und über die hintere Querseite (26) des Werkstückes (20) abrollbare Tastrolle (102) umfaßt, wobei der an die hintere Querseite (26) des Werkstückes (20) anlegbare Anlagebereich (106) der Tastrolle (102) in Bewegungsrichtung (22) über die der hinteren Querseite (26) zugeordnete Tastfläche (80) übersteht.

## Claims

1. Cutting system for machines for machining plate-shaped workpieces moved rectilinearly and continuously in a workpiece passage plane, for the purpose of severing projections of edge material which protrude beyond the workpiece front and rear transverse sides which are oriented substantially transversely to the direction of movement of the workpieces, the edge material being fitted on longitudinal workpiece sides which extend parallel with the direction of movement, having at least one saw unit which comprises a motor-driven saw blade and which is held in such a manner that it is displaceable between a position above the workpieces and a position below the workpieces at an angle to the direction of movement of the workpieces, and having a feeler device which is associated with the saw blade and which has a feeler face, the feeler face being aligned with the cutting plane of the saw blade and it being possible to apply it to the front or rear transverse side of the workpieces, **characterised in that** the feeler device (52, 54) comprises an alignment element (62, 84) which is displaceable together with the saw unit (28, 30), and a feeler element (56, 78) which is movable relative to the alignment element (62, 84) and which has the feeler face (58, 80).

2. Cutting system according to claim 1, **characterised in that** the feeler element (56, 78) is held on the alignment element (62, 84) in such a manner that it is displaceable perpendicularly to the workpiece passage plane.

3. Cutting system according to claim 1 or 2, **characterised in that** the feeler element (56, 78) is held on the alignment element (62, 84) by means of a guide rail (64, 86) and a guide slide (60, 82) which is displaceable along the guide rail (64, 86).

4. Cutting system according to claim 3, **characterised in that** the guide rail (64, 86) is held on the alignment element (62, 84), and the guide slide (60, 82) is held on the feeler element (56, 78).

5. Cutting system according to claim 4, **characterised in that** the feeler element (56, 78) is releasably connectable to the guide slide (60, 82).

6. Cutting system according to claim 4 or 5, **characterised in that** the guide rail (64, 86) is connected in a unitary manner to the alignment element (62, 84).

7. Cutting system according to any one of the preceding claims, **characterised in that** the feeler element (56, 78) is held on the alignment element (62, 84) by means of a linear guide.

8. Cutting system according to any one of the preceding claims, **characterised in that** the feeler element is in the form of a feeler strip (56, 78).

9. Cutting system according to any one of the preceding claims, **characterised in that** the feeler device (52, 54) comprises at least one stop (72, 76, 94, 98) for delimiting the movement of the feeler element (56, 78) relative to the alignment element (62, 84).

10. Cutting system according to claim 9, **characterised in that** a resilient buffer element (68, 90) is associated with at least one stop (72, 98).

11. Cutting system according to any one of the preceding claims, **characterised in that** the feeler device (52, 54) comprises a feeler roller (102) which can be applied to the upper side of the workpiece (20) and which can be rolled over the rear transverse side (26) of the workpiece (20), the application region (106) of the feeler roller (102), which region can be applied to the rear transverse side (26) of the workpiece (20), projecting beyond the feeler face (80) associated with the rear transverse side (26), in the direction of movement (22).

## Revendications

1. Système de coupe pour machines destinées à usiner des pièces en forme de plaques qui sont déplacées de façon rectiligne et continue dans un plan de passe des pièces afin de détacher des saillies de matériau en bordure qui s'étendent au-dessus des côtés transversaux avant et arrière des pièces qui sont orientés sensiblement transversalement à la direction de déplacement des pièces, lequel matériau en bordure est monté sur des côtés longitudinaux des pièces qui s'étendent parallèlement à la direction de déplacement, lequel système de coupe comprend au moins une unité de sciage, qui comporte une lame de scie entraînée par moteur et qui est maintenue de façon inclinée par rapport à la direction de déplacement des pièces de manière à pouvoir se déplacer entre une position au-dessus des pièces et une position au-dessous des pièces, et un organe palpeur associé à la lame de scie et comportant une surface de contact, la surface de contact étant alignée avec le plan de coupe de la lame de scie et pouvant porter sur les côtés transversaux avant et arrière des pièces, **caractérisé en ce que** l'organe palpeur (52, 54) comporte un élément d'orientation (62, 84) apte à se déplacer conjointement avec l'unité de sciage (28, 30), ainsi qu'un élément palpeur (56, 78) apte à se déplacer par rapport à l'élément d'orientation (62, 84) et présentant la surface de contact (58, 80).

2. Système de coupe selon la revendication 1, **caractérisé en ce que** l'élément palpeur (56, 78) est supporté par l'élément d'orientation (62, 84), de manière à pouvoir se déplacer perpendiculairement au plan de passe des pièces.

3. Système de coupe selon la revendication 1 ou 2, **caractérisé en ce que** l'élément palpeur (56, 78) est supporté par l'élément d'orientation (62, 84) au moyen d'un rail de guidage (64, 86) et d'un chariot de guidage (60, 82) apte à se déplacer le long du rail de guidage (64, 86).

4. Système de coupe selon la revendication 3, **caractérisé en ce que** le rail de guidage (64, 86) est supporté par l'élément d'orientation (62, 84), et le chariot de guidage (60, 82) est supporté par l'élément palpeur (56, 78).

5. Système de coupe selon la revendication 4, **caractérisé en ce que** l'élément palpeur (56, 78) peut être reliée de façon amovible au chariot de guidage (60, 82).

6. Système de coupe selon la revendication 4 ou 5, **caractérisé en ce que** le rail de guidage (64, 86) est relié d'une seule pièce à l'élément d'orientation (62, 84).

7. Système de coupe selon l'une des revendications précédentes, **caractérisé en ce que** l'élément palpeur (56, 78) est supporté par l'élément d'orientation (62, 84) au moyen d'un guide linéaire.

8. Système de coupe selon l'une des revendications précédentes, **caractérisé en ce que** l'élément palpeur est conformé en baguette de contact (56, 78).

9. Système de coupe selon l'une des revendications précédentes, **caractérisé en ce que** l'organe palpeur (52, 54) comporte au moins une butée (72, 76, 94, 98) destinée à limiter le déplacement de l'élément palpeur (56, 78) par rapport à l'élément d'orientation (62, 84).

10. Système de coupe selon la revendication 9, **caractérisé en ce qu'**un élément tampon élastique (68, 90) est associé à au moins une butée (72, 98).

11. Système de coupe selon l'une des revendications précédentes, **caractérisé en ce que** l'organe palpeur (52, 54) comporte un galet palpeur (102) pouvant porter sur le côté supérieur de la pièce (20) et apte à rouler sur le côté transversal arrière (26) de la pièce (20), la région d'appui (106) du galet palpeur (102), laquelle est apte à porter sur le côté transversal arrière (26) de la pièce (20), dépassant, dans la direction de déplacement (22), au-dessus de la surface de contact (80) associée au côté transversal arrière (26).
